# EUROPEAN PATENT APPLICATION

(11) **EP 2 915 717 A2**
(43) Date of publication of application: **09.09.2015**
(21) Application number: 15157895.2
(22) Date of filing: 05.03.2015
(51) Int. Cl.: B60W 50/00, B60W 30/14, B60Q 1/08, B60Q 1/34, B60H 1/00

(54) **GPS BASED VEHICULAR CONTROL**

(30) Priority: 07.03.2014 US 201414201440
(71) Applicant: NXP B.V., 5656 AG Eindhoven (NL)
(72) Inventor: Shenoy, Shakti Prasad, Redhill, RH1 1SH (GB)
(74) Representative: Terblanche, Candice Jane

(57) **Abstract**

One example embodiment discloses a GPS receiver having an antenna for receiving GPS signals and a cue generator generating a set of cues; a cue translator having: a cue extractor which selects a subset of the cues generated by the GPS receiver; a vehicle state input receiver receiving information from a vehicle controller indicating an operational state of a vehicle; and a vehicle action generator translating the cues and state into a set of vehicle action signals; and a vehicle controller coupled to the vehicle action generator and translating the vehicle action signals into vehicle commands which control the vehicle hardware or software systems.

## Description

### BACKGROUND

### Brief Background Introduction

This specification relates generally to systems and methods for vehicle control and in one example to a GPS based vehicular control.

According to a first aspect, there is provided a system for GPS based vehicular control, comprising: a processor that is adapted to execute stored instructions; and a memory device that stores instructions, wherein the instructions comprise: receiving a cue from a GPS Device which is responsive to a navigational state of a vehicle; translating the cue into a vehicle action; translating the vehicle action into a vehicle control signal; and commanding the vehicle to change the vehicle's operational state based on the vehicle control signal.

In some examples, only the GPS Device may determine the navigational state of the vehicle. The navigational state of the vehicle may include a current position of the vehicle with respect to natural and constructed objects and with respect to other vehicles. The cue may be at least one from a group consisting of: an audible speech message; a text message; a visual image; a change in a screen displayed; a pop-up menu; displayed colors; an electronic signal; and a software message. The cue may include at least one from a group consisting of: all information output by a GPS device; all items on a GPS display screen and all audible GPS sound signals. The vehicular control signal may be a machine-to-machine (M2M) communication signal.

The vehicular control signal may control at least one from a group consisting of: a turn-signal; a headlight; a light; a camera; HVAC; an electric motor; a battery; a chemical fuel engine; a transmission; a door lock; and a communication device. The vehicular control signal may control power supplied to a device within the vehicle. The vehicular control signal may include a signal to place a device within the vehicle on standby. The vehicular control signal may include a signal to place a device within the vehicle on standby. The vehicular control signal may include a signal to activate a turn signal in response to a turn cue from the GPS Device and a signal to deactivate the turn signal in response to a turn completed cue from the GPS Device.

According to a second aspect, there is provided a system for GPS based vehicular control, comprising: a GPS receiver having an antenna for receiving GPS signals and a cue generator generating a set of cues; a cue translator having: a cue extractor which selects a subset of the cues generated by the GPS receiver; a vehicle state input receiver receiving information from a vehicle controller indicating an operational state of a vehicle; and a vehicle action generator translating the cues and state into a set of vehicle action signals; and a vehicle controller coupled to the vehicle action generator and translating the vehicle action signals into vehicle commands which control the vehicle hardware or software systems.

According to a third aspect, there is provided an article of manufacture comprising at least one non-transitory, tangible computer readable storage medium containing executable computer instructions for GPS based vehicular control, the instructions comprising: receiving a cue from a GPS Device which is responsive to a navigational state of a vehicle; translating the cue into a vehicle action; translating the vehicle action into a vehicle control signal; and commanding the vehicle to change the vehicle's operational state based on the vehicle control signal.

### BRIEF DESCRIPTION OF THE DRAWINGS

Figure 1 is one example of a system for GPS based vehicular control.
Figure 2 is a first example of a flowchart for implementing a method for GPS based vehicular control.
Figure 3 is a second example of a flowchart for implementing a method for GPS based vehicular control.
Figure 4 is a third example of a flowchart for implementing a method for GPS based vehicular control.
Figure 5 is another example of a system for GPS based vehicular control.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

### DETAILED DESCRIPTION

Global Positioning System (GPS) devices provide navigational assistance to occupants of a vehicle using various cues. Cues are herein defined to include all information output by a GPS device, including all items on a display screen, all audible sound signals, and electronic signals and messages output over a network connections such as Bluetooth, USB cable, Near-Field Communication (NFC) and others. In example embodiments, cues include: an audible speech message; a text message; a visual image; a change in a screen displayed; a pop-up menu; display augmentations attribute variations (e.g. change of colors indicating various amounts of vehicular traffic); an electronic signal; and a software message. Example cues include an audible cue synthetic speech command saying "After 200 meters turn right" and a visual cue of an "Arrow" appearing on the screen showing the left turn.

Depending upon a driver of a vehicle, such audible and visual cues may distract the driver especially for aftermarket and smartphone based GPS devices which are placed in variable locations and which may be placed off a driver's normal line-of-sight when looking at the road ahead. Such distraction may be dangerous when the vehicle is moving at considerable speed.

A system, apparatus, device and method for translating such GPS cues into selected vehicular control signals can substantially enhance vehicle safety and driver convenience. In one example turn-indicator lights in a car can be controlled in response to a GPS "exit this off-ramp" cue. GPS driven activation of the turn signals provides an additional cue to the driver as to which way to turn, also it also assists in safer driving experience for both the driver as well as others on the road. The user knows that he/she has to take a left turn without having to look at the visual cues. Also, using this GPS cue translation, there is no question of the user forgetting to turn on the indicator, thereby increasing safety for drivers and others on the road.

In other embodiments the vehicles speed can be autonomously controlled during navigation (ex: decide if the car is moving too fast to take a turn and gracefully reduce speed of the car). In another example, combination of the GPS cues with other vehicle state information (e.g. such as low fuel or battery charge level) could cause various indicator lights on the vehicle's dash-board to light up (e.g. cause the low-fuel/charge light to blink) when the GPS indicates a gas station or electric charging station is nearby. Other in-vehicle devices which can be coordinated with GPS cues include: the vehicle's HVAC controls; file downloading due to proximity of free-WiFi; changing what is played in the car entertainment system; tuning to a local broadcast radio station; and reducing volume of vehicle's music system when the car reaches a GPS cued accident scene.

These example embodiments provide a simple interface for using GPS cues to control certain vehicle systems and thereby enhance road safety, especially when aftermarket GPS devices are used. While a vehicle could be fitted with a suite of sensors and proximity detection devices, use of GPS cues provides different low cost way to support important vehicle safety and comfort systems.

Details of the present claimed device/service are now discussed.

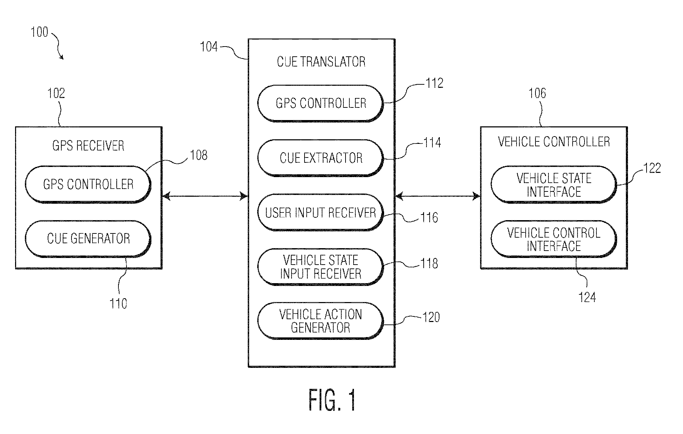

Figure 1 is one example of a system 100 for GPS based vehicular control. The system includes a GPS receiver 102, a cue translator 104, and a vehicle controller 106.

The GPS receiver 102 has several example embodiments. In one example embodiment, the GPS receiver 102 is a standalone dedicated navigation device attached to a vehicle window or dashboard. In another example, the GPS receiver 102 is embedded in a smartphone which may or may not come with preloaded mapping software. And in yet another example, the GPS receiver 102 is embedded in a vehicle's electronics (e.g. in an intelligent device integrated into the vehicle's electronic systems). The GPS receiver 102 includes an antenna for receiving GPS signals from orbiting satellites, and also includes various other circuits, software and display screens.

The GPS receiver 102 also includes a GPS controller 108 and a cue generator 110. The GPS controller 108 is responsive to user input and factory default settings. The GPS controller 108 configures the GPS receiver 102 so that the cue generator 110 generates a set of cues, some of which have been described earlier in this specification. The GPS controller 108 is also responsive to commands from the cue translator 104, as is discussed later in this specification. In one example, the GPS receiver 102 generates a cue instructing the vehicle operator to "after 200 meters turn left".

The cue translator 104 translates cues received from the GPS receiver 102 into a set of vehicle actions. In one example embodiment, the cue translator 104 is embedded in a smartphone; and in another example, the GPS receiver 102 is embedded in a vehicle's electronics (e.g. in an intelligent device integrated into the vehicle's electronic systems). Depending upon the embodiment, the cue translator 104 can communicate with the GPS receiver 102 and the vehicle controller 106 over either a hardwire cable connection, a wireless radio connection (e.g. Bluetooth, NFC, a low-power-RF link), or if embedded through circuit board paths or chip level bus connections. Machine-to-machine (M2M) communication standards are incorporated as appropriate.

The cue translator 104 includes a GPS controller 112, a cue extractor 114, a user input receiver 116, a vehicle state input receiver 118, and a vehicle action generator 120.

The GPS controller 112 in the cue translator 104 interfaces with the GPS controller 108 in the GPS receiver 102 to control which cues the GPS receiver 102 outputs. This control is similar to when a user would interface with the GPS receiver 102 directly, perhaps through a touch-screen, to change images displays and otherwise configure the GPS receiver 102.

The cue extractor 114 extracts cues generated by the cue generator 110 in the GPS receiver 102 (e.g. turn right, turn left, keep right, accident ahead, alternate route available, etc.). Upon initialization of the cue translator 104 a default set of cues are extracted by the cue extractor 114.

The user input receiver 116 accepts commands from a user to configure the cue translator 104. Such configurations include: identification of a set of cues to be extracted from the GPS receiver 102; how the extracted cues are filtered and processed (e.g. user specifies that a vehicle's turn signal indicators should be turned on 100 meters before the actual turn; at what time of day should the vehicle's headlights be turned on; and so on). In an example embodiment these user preferences are programmed in part by an Insurance Company which insures the vehicle, and/or a Rental Company which rents the vehicle.

The vehicle state input receiver 118 receives information from the vehicle controller 106 indicating an operational state of the vehicle. This vehicle state information includes a default set of information which the cue translator 104 is factory programmed to request from the vehicle (e.g. the vehicle's fuel or battery charge level) but can be reconfigured in response to information obtained from the user input receiver 116.

The vehicle action generator 120 translates information obtained and processed by the cue translator 104 into a set of vehicle actions that are then sent to the vehicle controller 106. In one example vehicle action generator 120 receives a cue labeled "turn left after 200 meters" from the cue extractor 114. The vehicle action generator 120 also retrieves the user preferences that "the vehicle's turn signal indicators should be turned on 100 meters before the actual turn". The vehicle action generator 120 compares the 200 meter turn cue from the GPS receiver 102 and the 100 meter before turn user preference and thus waits until a 100 meters till turn cue is received from the GPS receiver 102 before sending a vehicle action signal to the vehicle controller 106 instructing that the turn signals be activated. Thus the vehicle action generator 120 is programmed to wait for a pre-designated time (e.g. till the vehicle proceeds for another 100 meters) and then sends a signal to switch on the "left turn" indicator of the car.

In another example vehicle action generator 120 receives the same cue introduced above (i.e. "turn left after 200 meters") from the cue extractor 114. The vehicle action generator 120 also retrieves the user preferences that "the vehicle's left-forward-side camera should be turned on and that the video be stored in a non-volatile memory 50 meters before the actual turn". 50 meters before the turn, the vehicle action generator 120 sends vehicle action signals to the vehicle controller 106 instructing that the left-forward-side camera be activated and images stored to a memory. In this way an Insurance Company which insures the vehicle and/or a Rental Company which rents the vehicle could better determine fault should an accident occur or ensure that the driver is driving safely. Optionally, a head-up windshield display could augment the information shown to the driver on the left-side of the car (e.g. infra-red night-time people or object identification information), thereby improving safety.

In another example, cues received from the GPS receiver 102 indicate that traffic is heavy, a turn is in 500 meters, and the vehicle is on a highway and is four lanes away from the exit lane. In this situation the vehicle action generator 120 may have been programmed to override the user's normal 100 meter turn preference and send the turn signal to the vehicle controller 106 sooner so as to provide the vehicle operator with more time to slowly switch lanes toward the exit lane.

After cues from the GPS receiver 102 indicate that the turn has been taken, the vehicle action generator 120 sends a vehicle action signal to the vehicle controller 106 to turn off the turn signal indicator.

The vehicle controller 106 in an example embodiment is embedded in a vehicle's electronics (e.g. in an intelligent device integrated into the vehicle's electronic systems). The vehicle controller 106 includes a vehicle state interface 122 and a vehicle control interface 124. The vehicle state interface 122 collects operational information from the vehicle (e.g. status of turn signals, headlights, fuel level, engine condition, and so on) and makes this information available to the vehicle state input receiver 118 in the cue translator 104. The vehicle control interface 124 receives the vehicle action signals from the vehicle action generator 120 and translates the action signals into vehicle commands which the vehicle manufacture has built into the vehicle during production or programed into the vehicle at some point in time. The vehicle commands control the vehicle's hardware and software systems.

In other example embodiments the hardware and software included in the GPS receiver 102, cue translator 104, and vehicle controller 106 are distributed and/or aggregated in a variety of ways depending upon the vehicle controlled and other manufacturing or marketing criteria. For example, in an example embodiment a downloadable APP enables the GPS receiver 102, cue translator 104, and vehicle controller 106 to operate on a smartphone that not only includes a GPS antenna but also includes a communication link which wirelessly connects directly with the vehicle's command and control systems.

While the system 100 for GPS based vehicular control has been discussed with respect to the specific example of turn-signal control in a vehicle, the elements discussed equally apply to any other vehicle hardware or software that can be controlled with a vehicle command signal.

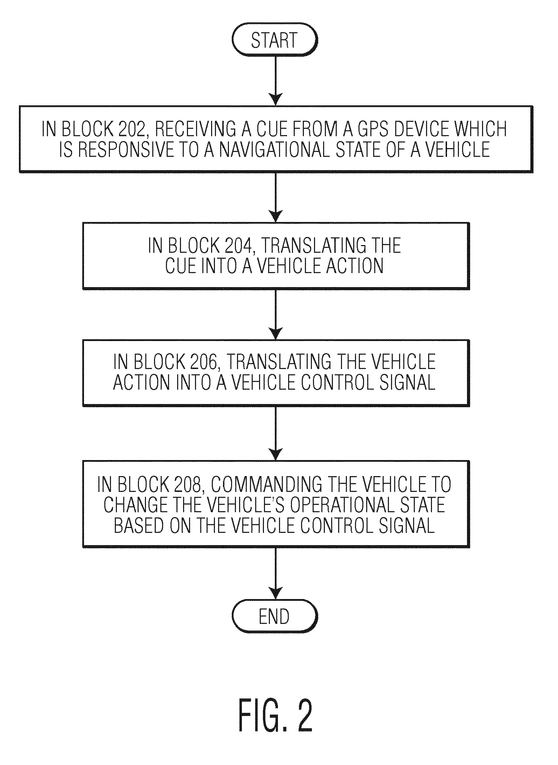

Figure 2 is a first example of a flowchart for implementing a method for GPS based vehicular control. In block 202 a cue from a GPS Device is received which is responsive to a navigational state of a vehicle. The navigational state of the vehicle includes a current position of the vehicle with respect to natural and constructed objects and with respect to other vehicles. Example natural objects include hills, trees, lakes, and weather conditions. Example constructed objects include highways, bridges, and parking lots.

In block 204 the cue is translated into a vehicle action. Then in block 206 the vehicle action is translated into a vehicle control signal; and in block 208, commanding the vehicle to change the vehicle's operational state based on the vehicle control signal.

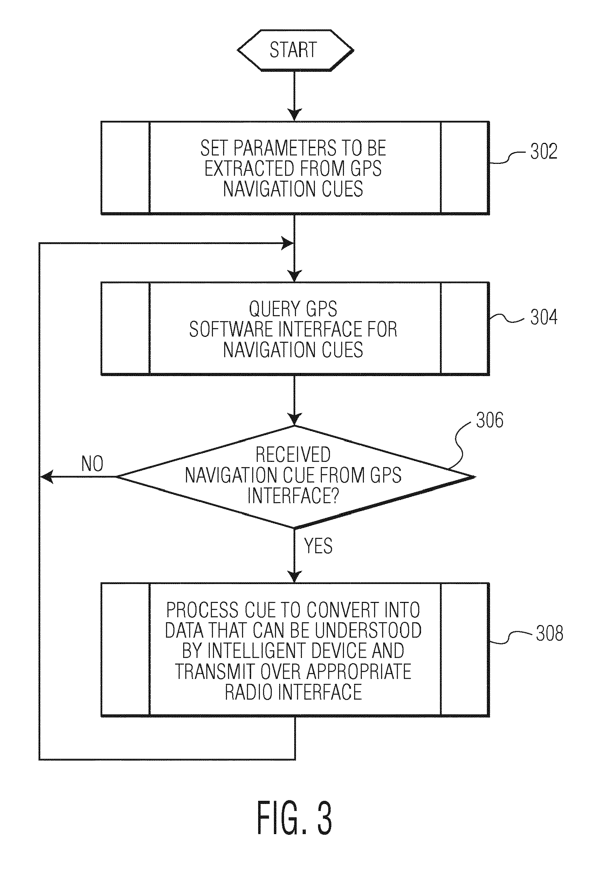

Figure 3 is a second example of a flowchart for implementing a method for GPS based vehicular control. In this example the GPS based vehicular control is embodied in a Smart Phone APP or GPS device in combination with an intelligent navigation assistant that controls a vehicle's indicators. In block 302 set parameters to be extracted from GPS navigation cues. In block 304 query GPS software interface for navigation cues. In one example embodiment, the query interval may be periodic. In another example embodiment, the query interval may vary according to an adaptive algorithm optimized for a particular variable (e.g. increasing queries in city environments, decreasing queries in rural environment, or lengthening battery life for vehicles without alternators). In block 306 wait for a received navigation cue from GPS interface. Then in block 308 process cue to convert into data that can be understood by intelligent device and transmit over appropriate radio interface.

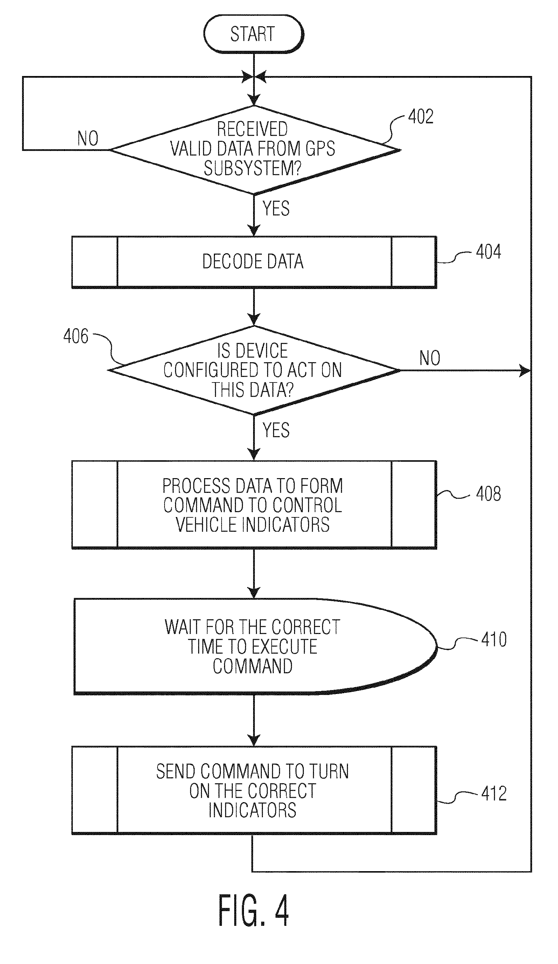

Figure 4 is a third example of a flowchart for implementing a method for GPS based vehicular control. In this example the GPS based vehicular control is embodied in an Intelligent Navigation Assistant having controller circuits that can control the vehicle indicator lights. In block 402 wait for a valid data cue to be received from GPS subsystem. In block 404 decode the data cue. In block 406 check if the Intelligent Navigation Assistant device is configured to act on the data cue. If yes, then in block 408 process data cue to form a command to control the vehicle's indicators. In block 410 wait for a correct time to execute command. And then in block 412 send a command to turn on the correct indicators in the vehicle.

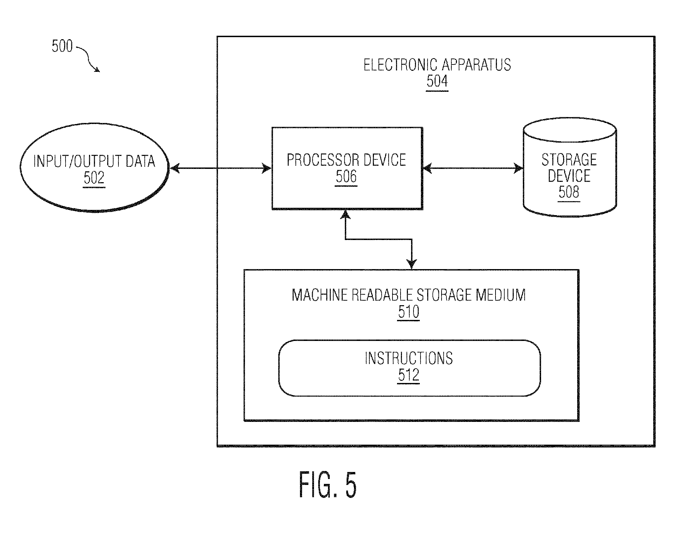

Figure 5 is another example 500 of the system 100 for GPS based vehicular control. The diagram 500 shows an input/output data 502 interface with an electronic apparatus 504. The electronic apparatus 504 includes a processor 506, a storage device 508, and a machine-readable storage medium 510. The machine-readable storage medium 510 includes instructions 512 which control how the processor 506 receives input data 502 and transforms the input data into output data 502, using data within the storage device 508. Example instructions 512 stored in the machine-readable storage medium 510 are discussed elsewhere in this specification.

The processor (such as a central processing unit, CPU, microprocessor, application-specific integrated circuit (ASIC), etc.) controls the overall operation of the storage device (such as random access memory (RAM) for temporary data storage, read only memory (ROM) for permanent data storage, firmware, flash memory, external and internal hard-disk drives, and the like). The processor device communicates with the storage device and machine-readable storage medium using a bus and performs operations and tasks that implement one or more blocks stored in the machine-readable storage medium.

The blocks comprising the flowcharts in the above Figures can be executed in any order, unless a specific order is explicitly stated. Also, those skilled in the art will recognize that while one example method embodiment is now discussed, the material in this specification can be combined in a variety of ways to yield other examples as well. The method next discussed is to be understood within a context provided by this and other portions of this detailed description.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

Functional and software instructions described above are typically embodied as a set of executable instructions which are executed on a computer which is programmed with and controlled by said executable instructions. Such instructions are loaded for execution on a processor (such as one or more CPUs). The processor includes microprocessors, microcontrollers, processor modules or subsystems (including one or more microprocessors or microcontrollers), or other control or computing devices. A processor can refer to a single component or to plural components.

In one example, one or more blocks or steps discussed herein are automated. In other words, apparatus, systems, and methods occur automatically. The terms automated or automatically (and like variations thereof) mean controlled operation of an apparatus, system, and/or process using computers and/or mechanical/electrical devices without the necessity of human intervention, observation, effort and/or decision.

In some examples, the methods illustrated herein and data and instructions associated therewith are stored in respective storage devices, which are implemented as one or more non-transient computer-readable or computer-usable storage media or mediums. The non-transient computer-usable media or mediums as defined herein excludes signals, but such media or mediums may be capable of receiving and processing information from signals and/or other transient mediums. The storage media include different forms of memory including semiconductor memory devices such as DRAM, or SRAM, Erasable and Programmable Read-Only Memories (EPROMs), Electrically Erasable and Programmable Read-Only Memories (EEPROMs) and flash memories; magnetic disks such as fixed, floppy and removable disks; other magnetic media including tape; and optical media such as Compact Disks (CDs) or Digital Versatile Disks (DVDs). Note that the instructions of the software discussed above can be provided on one computer-readable or computer-usable storage medium, or alternatively, can be provided on multiple computer-readable or computer-usable storage media distributed in a large system having possibly plural nodes. Such computer-readable or computer-usable storage medium or media is (are) considered to be part of an article (or article of manufacture). An article or article of manufacture can refer to any manufactured single component or multiple components.

In this specification, example embodiments have been presented in terms of a selected set of details. However, a person of ordinary skill in the art would understand that many other example embodiments may be practiced which include a different selected set of these details. It is intended that the following claims cover all possible example embodiments.

## Claims

1. A system for GPS based vehicular control, comprising:
a processor that is adapted to execute stored instructions; and
a memory device that stores instructions, wherein the instructions comprise:
receiving a cue from a GPS Device which is responsive to a navigational state of a vehicle;
translating the cue into a vehicle action;
translating the vehicle action into a vehicle control signal; and
commanding the vehicle to change the vehicle's operational state based on the vehicle control signal.

2. The instructions of claim 1, wherein only the GPS Device determines the navigational state of the vehicle.

3. The instructions of claim 2, wherein the navigational state of the vehicle includes a current position of the vehicle with respect to natural and constructed objects and with respect to other vehicles.

4. The instructions of claim 1, wherein the cue is at least one from a group consisting of: an audible speech message; a text message; a visual image; a change in a screen displayed; a pop-up menu; displayed colors; an electronic signal; and a software message.

5. The instructions of claim 1, wherein the cue includes at least one from a group consisting of: all information output by a GPS device; all items on a GPS display screen and all audible GPS sound signals.

6. The instructions of claim 1, wherein the vehicular control signal is a machine-to-machine (M2M) communication signal.

7. The instructions of claim 1, wherein the vehicular control signal controls at least one from a group consisting of: a turn-signal; a headlight; a light; a camera; HVAC; an electric motor; a battery; a chemical fuel engine; a transmission; a door lock; and a communication device.

8. The instructions of claim 1, wherein the vehicular control signal controls power supplied to a device within the vehicle.

9. The instructions of claim 1, wherein the vehicular control signal includes a signal to place a device within the vehicle on standby.

10. The instructions of claim 1, wherein the vehicular control signal includes a signal to place a device within the vehicle on standby.

11. The instructions of claim 1, wherein the vehicular control signal includes a signal to activate a turn signal in response to a turn cue from the GPS Device and a signal to deactivate the turn signal in response to a turn completed cue from the GPS Device.

12. A system for GPS based vehicular control, comprising:
a GPS receiver having an antenna for receiving GPS signals and a cue generator generating a set of cues;
a cue translator having:
a cue extractor which selects a subset of the cues generated by the GPS receiver;
a vehicle state input receiver receiving information from a vehicle controller indicating an operational state of a vehicle; and
a vehicle action generator translating the cues and state into a set of vehicle action signals; and
a vehicle controller coupled to the vehicle action generator and translating the vehicle action signals into vehicle commands which control the vehicle hardware or software systems.
